(19) Europäisches Patentamt
European Patent Office
Office européen des brevets

(11) **EP 0 698 986 B1**

(12) **EUROPÄISCHE PATENTSCHRIFT**

(45) Veröffentlichungstag und Bekanntmachung des Hinweises auf die Patenterteilung:
**28.05.2003 Patentblatt 2003/22**

(51) Int Cl.⁷: $H04M\ 9/08$

(21) Anmeldenummer: **95112666.3**

(22) Anmeldetag: **11.08.1995**

(54) **Verfahren zur adaptiven Echokompensation**

Method for adaptive echo compensation

Procédé pour la compensation adaptative d'écho

(84) Benannte Vertragsstaaten:
**AT BE CH DE ES FR GB IT LI NL SE**

(30) Priorität: **25.08.1994 DE 4430189**

(43) Veröffentlichungstag der Anmeldung:
**28.02.1996 Patentblatt 1996/09**

(73) Patentinhaber: **Alcatel SEL Aktiengesellschaft 70435 Stuttgart (DE)**

(72) Erfinder:
• **Walker, Michael
D-73666 Baltmannsweiler 2 (DE)**
• **Matt, Hans-Jürgen, Dr.
D-71686 Remseck (DE)**

(74) Vertreter: **Rausch, Gabriele, Dr. et al
Alcatel
Intellectual Property Department Stuttgart
70430 Stuttgart (DE)**

(56) Entgegenhaltungen:
• **KENSAKU FUJII ET AL: "AN ANALYSIS OF THE CONVERGENCE PROPERTY OF THE NORMALIZED LMS ALGORITHM FOR ECHO CANCELLERS" FUJITSU-SCIENTIFIC AND TECHNICAL JOURNAL, Bd. 29, Nr. 4, 21.Dezember 1993, Seiten 390-400, XP000439113**
• **FRENZEL R ET AL: "USING PREWHITENING AND STEPSIZE CONTROL TO IMPROVE THE PERFORMANCE OF THE LMS ALGORITHM FOR ACOUSTIC ECHO COMPENSATION" PROCEEDINGS OF THE INTERNATIONAL SYMPOSIUM ON CIRCUITS AND SYSTEMS, SAN DIEGO, MAY 10 - 13, 1992, Bd. VOL. 4, Nr. CONF. 25, 10.Mai 1992, INSTITUTE OF ELECTRICAL AND ELECTRONICS ENGINEERS, Seiten 1930-1932, XP000338371**

## Beschreibung

Die Erfindung betrifft ein Verfahren zur Echokompensation in einem Übertragungssystem, bei dem eine unerwünschte Kopplung zwischen einem Signal in Senderichtung und einem Signal in Empfangsrichtung auftritt.

Technische Anwendung findet ein solches Verfahren beispielsweise in Freisprecheinrichtungen von Telekommunikationsendgeräten, bei denen die akustische Kopplung vom Lautsprecher zum Mikrofon dazu führt, daß ein Teil des Empfangssignals vom Lautsprecher über die Luftstrecke und gegebenenfalls ein Gehäuse zum Mikrofon und somit zum Sprecher auf der anderen Seite des Übertragungssystems zurückgelangt. Dieser Teil wird beim Sprecher als störendes Echo wahrgenommen. Die Größe der unerwünschten Kopplung zwischen Lautsprecher und Mikrofon wird durch die Art der Schallwandler, deren Abstand voneinander, deren Richtwirkung und Empfindlichkeit und von der Umgebung, in der die Schallwandler betrieben werden, bestimmt.

Es ist bekannt, mit digitalen Filtern das Echo nachzubilden und dieses vom echobehafteten Mikrofonsignal zu subtrahieren vgl. Hänsler, E: The Hands-Free Telephone Problem - An Annotated Bibliography. Signal Processing, Band 27, Nr. 3, Juni 1992, Seite 259-271. Zur Bestimmung der Filterkoeffizienten des digitalen Filters können verschiedene Verfahren angewendet werden, beispielsweise ein nichtlinearer kanonischer mit Vorzeichenstelle versehener Algorithmus, vgl. EP 0 310 055 B1, oder der Normalized Least Mean Square Algorithmus, kurz NLMS-Algorithmus genannt, vgl. T. Huhn, H.-J. Jentschel: Kombination von Geräuschreduktion und Echokompensation beim Freisprechen; Nachrichtentechnik Elektronik, Berlin 43 (1993), Seite 274-280.

Um eine brauchbare Annäherung an die Zeitfunktion der Echos zu erhalten, sind unter Umständen einige tausend Filterkoeffizienten nötig. Für die praktische Realisierung ist dazu ein Gleitkomma- Signalprozessor mit hoher Arbeitsgeschwindigkeit und ein großer Speicherplatzbedarf erforderlich, so daß diese Möglichkeiten nur mit hohem Kostenautwand technisch verwirklicht werden können. Die bisher bekannten Lösungen sind wegen ihres großen Aufwandes ungeeignet, um insbesondere die kommerziellen Anforderungen an qualitativ zufriedenstellende Freisprecheinrichtungen, beispielsweise bei Schmalbandtelefonen, bei Schmalband- und Breitband-Bildtelefonen, in Videokonferenzstudios, für Saalbeschaltungen und für Hörgeräte erfüllen zu können.

Die Schwierigkeit des Abgleichs der Filterkoeffizienten besteht darin, die aktuelle Impulsantwort auf Grund der akustischen Rückkopplung vom Lautsprecher über die Luftstrecke und zum Teil über feste Körper, beispielsweise über ein Gerätegehäuse, zum Mikrofon präzise zu messen, auch wenn störende Einflüsse vorhanden sind. So besteht die Forderung, daß bei Einsatz eines Echokompensators gleichzeitig sehr zuverlässig unterschieden werden muß

a) zwischen Echos und lokalen Geräuschen, insbesondere dem Gegensprechen, der sogenannten double-talk situation,

b) zwischen Echos von weit entfernten Reflektoren und Echos von nahe befindlichen Reflektoren sowie

c) zwischen Empfangssignalformen, die hinreichend präzise Messungen erlauben, beispielsweise hinreichend starke breitbandige Signale, wie zum Beispiel Rauschen, wie sie idealerweise beim Impulsstoß auftreten, und für die Messungen ungeeignete Empfangssignalformen, wie beispielsweise schwache Signale oder ein sinusförmiger Dauerton.

Um diese Forderungen in Teilen erfüllen zu können, ist bereits vorgeschlagen worden, die Filterkoeffizienten eines Finite Impulse Response Filters, kurz FIR-Filter, nach dem bekannten NLMS-Algorithmus zu berechnen und die bei der Neuberechnung eines Filterkoeffizienten verantwortliche Schrittweite $\alpha$ abhängig von der Größe des möglichen Echosignals umschaltbar zu machen, vgl. deutsche Patentanmeldung P 43 05 256.8. Um beim Gegensprechen Fehleinstellungen auszuschließen, wird in diesem Fall die Schrittweite $\alpha$ gleich Null gesetzt, so daß eine Änderung der Filterkoeffizienten unterbleibt. Die Filterkoeffizienten werden aber auch dann berechnet, wenn der lokale Sprecher schweigt, das bedeutet aber, daß die Filterkoeffizienten auch bei Vorhandensein von sehr schwachen Eingangssignalen, zum Beispiel Rauschen, neu berechnet werden und damit eine Fehleinstellung des Echokompensators erfolgt. Es ist in dieser Anmeldung auch bereits vorgeschlagen worden, zur Verbesserung der Echounterdrückung einen Lautsprecher-Mikrofon-Kopplungsfaktor zu bestimmen und von diesem abhängig die vom Lautsprecher erzeugte Lautstärke oder die Mikrofonempfindlichkeit zu variieren. Der Lautsprecher-Mikrofon-Kopplungsfaktor wird aus der Korrelation des Mikrofonsignals mit dem Lautsprechersignal ermittelt. Eine solche Korrelationsanalyse hat aber den Nachteil, daß wegen der Ähnlichkeit der Sprachsignale Fehlentscheidungen des Korrelators nicht ausgeschlossen sind. Außerdem ist der Rechenaufwand sehr groß, so daß die Korrelationsanalyse allein etwa 30 % des gesamten Programmaufwandes benötigt.

Es besteht nun die Aufgabe, ein Verfahren zur adaptiven Echokompensation anzugeben, das bei unterschiedlichen Umgebungsbedingungen universell einsetzbar ist und das mit Hilfe einer integrierten Schaltung in Freisprecheinrichtungen unterschiedlicher Größe als Massenbedarfsgut kostengünstig realisierbar ist. Dabei wird in bekannter Weise ein FIR-Filter eingesetzt, dessen Filterkoeffizienten beispielsweise nach dem NLMS-Algorithmus ermittelt werden, wie aus den Dokumenten XP439113 und XP338371 bekannt. Diese Aufgabe wird durch das im ersten Patentanspruch beschriebene Verfahren gelöst, das im folgenden am Beispiel eines Echokompensators in einer Freisprecheinrichtung beschrieben wird.

Die Änderung der Filterkoeffizienten wird bei diesem Verfahren abhängig von dem jeweiligen aktuellen Kopplungsfaktor zwischen Lautsprecher und Mikrofon gesteuert. Bei der Bestimmung des Kopplungsfaktors werden jedoch nur geeignete Empfangssignale ausgewertet, das bedeutet, schwach empfangene Signale werden ebenso von der Bewertung ausgeschlossen wie lokale Signale, die beim Gegensprechen auftreten. Der Kopplungsfaktor wird unter diesen Einschränkungen aus dem Verhältnis des elektrischen Signals am Mikrofon zum elektrischen Signal am Lautsprecher bestimmt. Dabei wird das elektrische Signal am Lautsprecher entsprechend der akustischen Signallaufzeit vom Lautsprecher zum Mikrofon verzögert, so daß das Verhältnis von zeitlich sich entsprechenden Signalen gebildet wird.

Die einzustellende Verzögerungszeit wird aus der zeitlichen Lage des größten Filterkoeffizienten bezüglich des Beginns der Impulsantwort des FIR-Filters ermittelt.

Der Wert des größten Filterkoeffizienten dient als Ausgangsgröße zur Normierung für die weiteren Filterkoeffizienten, so daß eine genaue Darstellung der Filterkoeffizienten bei einem durch einen Festkommarechner vorgegebenen Wertebereich mit beispielsweise 16 bit pro Abtastwert möglich wird.

Die empfangenen Signale werden über ein Hochpaßfilter mit niedriger Grenzfrequenz auf das FIR-Filter des Echokompensators gegeben.

Der Mittelwert aus der Differenz der Beträge des direkten Mikrofonsignals und des kompensierten Mikrofonsignals wird ständig überprüft. Falls der Mittelwert negativ wird, zeigt dies eine Fehleinstellung, eine sogenannte Überkompensation, des Echokompensators an.

Die Nachbildung des Echosignals wird mit einer im Vergleich zu bekannten Lösungen geringen Anzahl von Filterkoeffizienten erreicht, so daß das FIR-Filter damit auch kostengünstig realisierbar ist.

In den Unteransprüchen sind Gestaltungsmöglichkeiten des Verfahrens und Varianten beim Einsatz in Freisprecheinrichtungen beschrieben.

Mit dem erfindungsgemäßen Verfahren ist ein Echokompensator mit geringem Aufwand realisierbar, der sich sehr schnell und sehr genau an unterschiedliche Bedingung anpaßt und dessen Stabilität bei schwachen Empfangssignalen und bei lokalen Rauschsignalen und beim Gegensprechen erhalten bleibt. Ein solcher Echokompensator wird in Freisprecheinrichtungen eingesetzt, die eine natürliche Unterhaltung zweier oder mehrerer Gesprächspartner ermöglichen.

Das Verfahren ist allgemein, also auch bei nicht akustischer Echokompensation verwendbar.

Die Erfindung wird nachstehend an einem Ausführungsbeispiel erläutert. In der dazugehörigen Zeichnung zeigen

Fig.1    eine Darstellung der lokalen Situation beim Freisprechen,

Fig. 2   ein Fernsprechendgerät mit Darstellung der Möglichkeiten der Echobildung,

Fig. 3   eine Schaltungsanordnung eines FIR-Filters und eine Schaltungsanordnung zur Bestimmung eines Qualitätsmaßes,

Fig. 4   ein Zeitdiagramm zur Darstellung einer Gegensprechsituation,

Fig. 5   eine Schaltungsanordnung eines Schätzers der Restkopplung nach dem Echoentzerrer,

Fig. 6   eine Schaltungsanordnung eines Geräuschpegelschätzers,

Fig. 7   eine Schaltungsanordnung eines Gewinn- und Verlustschätzers und

Fig. 8   ein Blockschaltbild einer Freisprecheinrichtung

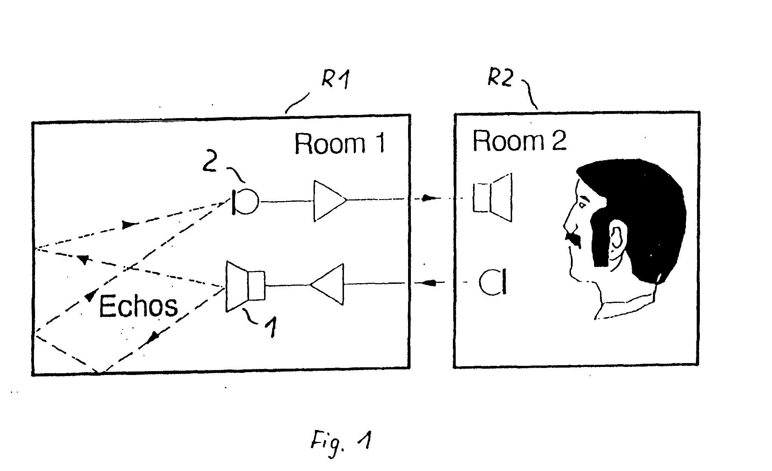

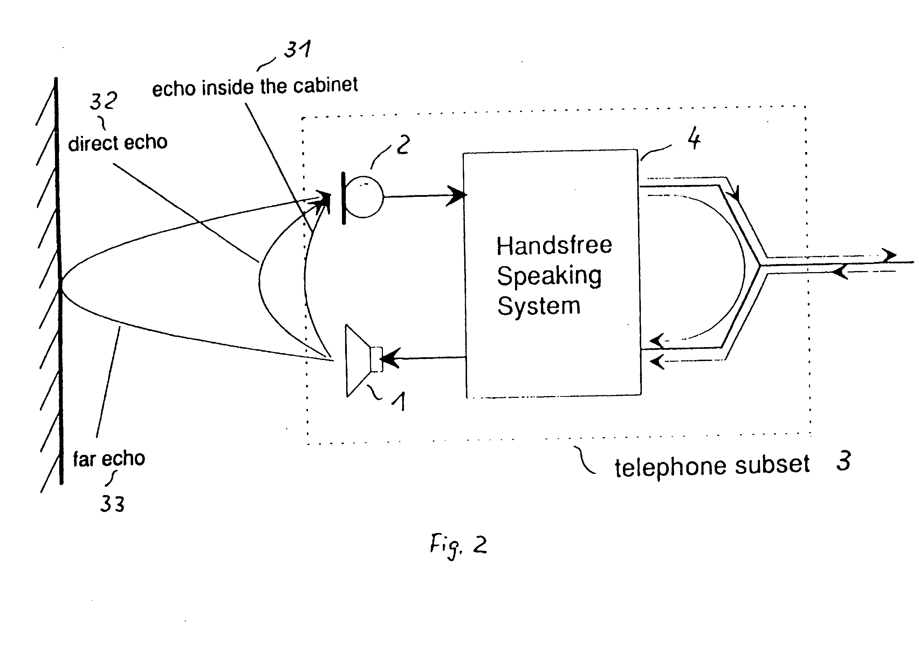

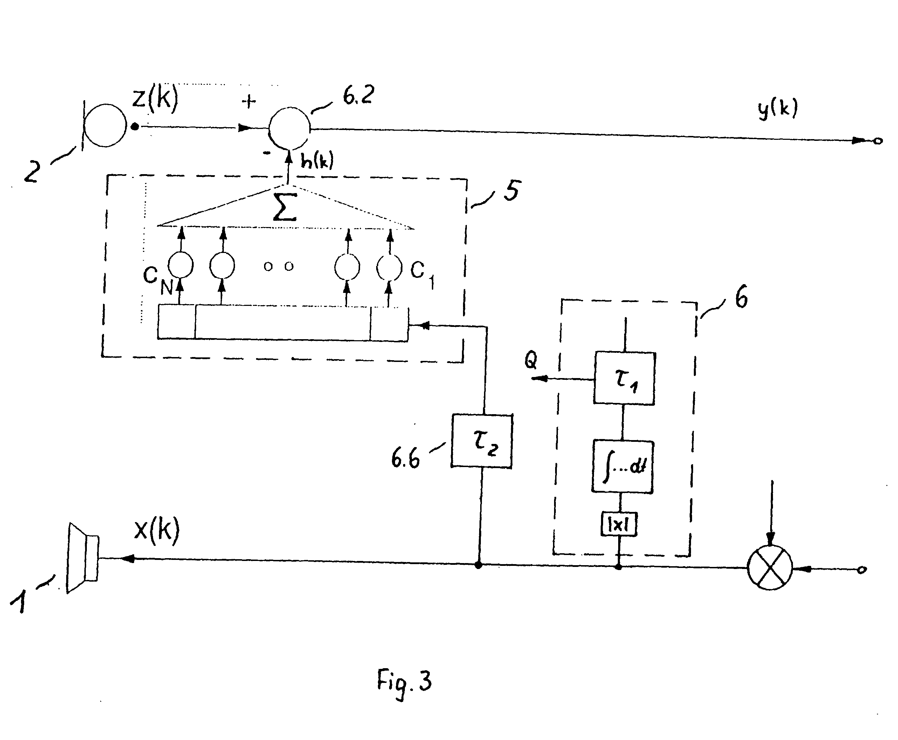

In Fig. 1 ist im Raum R2 ein Sprecher dargestellt, dessen Sprache in den Raum R1 übertragen wird. Die im Raum R1 von einem Lautsprecher 1 gesendeten akustischen Signale gelangen zum Teil in ein Mikrofon 2 und erreichen dann den Sprecher im Raum 2 als akustische Echos. Fig. 2 zeigt ein Fernsprechendgerät 3 mit Lautsprecher 1, Mikrofon 2 und einer Freisprecheinrichtung 4, die einen Echokompensator enthält. Das Mikrofon 2 wird allgemein von einem kugelförmigen Raum mit einem bestimmten Radius umgeben, aus dem Echos empfangen werden können. In Fig. 2 sind unterschiedliche Echoentstehungsmöglichkeiten dargestellt. In dem Fernsprechendgerät 3 erfolgt über das Gehäuse eine Kopplung zwischen Lautsprecher 1 und Mikrofon 2, so daß Echos 31 innerhalb des Gehäuses entstehen. Weiterhin treten direkte Echos 32 über die Luftstrecke auf und schließlich indirekte, weiter entfernte Echos 33 durch Reflexionen an den Raumbegrenzungen oder an Gegenständen oder Personen innerhalb des Raumes. Bei der Bewertung dieser akustischen Situation müssen als Störungen Rauschsignale und möglicherweise ein Gegensprechen aus dem Raum R1 gemäß Fig. 1 berücksichtigt werden. Grundsätzlich ist es bekannt, Echos mit einem Echokompensator zu eliminieren. Fig. 3 zeigt als wesentlichen Bestandteil eines Echokompensators ein Finite Impulse Response Filter, kurz FIR-Filter 5, dessen Ausgangssignal $h(k)$ von dem echobehafteten Abtastwert des Mikrofonsignals $z(k)$ subtrahiert wird und einen Abtastwert des kompensierten Mikrofonsignals $y(k)$ liefert. Um das Ausgangssignal des FIR-Filters 5 dem Echo möglichst identisch nachzubilden, wird der Abtastwert des Lautsprechersignals $x(k)$ dem FIR-Filter über eine Verzögerungsschaltung 6.6 zugeführt, so daß somit die Signallaufzeit vom Lautsprecher 1 zum Mikrofon 2 berücksichtigt wird. Weiterhin ist in Fig. 3 ein Filter 6 zur Bestimmung eines Qualitätsmaßes Q dargestellt.

Die Echos aus dem Raum um das Mikrofon 2 werden durch eine Anzahl N der Filterkoeffizienten $c_1$ bis $c_N$ des FIR-Filters 5, der Abtastfrequenz $f_s$ und dem kürzesten Abstand $d_{ak}$ zwischen Lautsprecher 1 und Mikrofon 2 beschrieben. Dem Abstand $d_{ak}$ entspricht eine minimale akustische Signallaufzeit $t_{ak}$ zwischen Lautsprecher 1 und Mikrofon 2, innerhalb derer keine Echos auftreten können, so daß die Impulsantwort des Systems Lautsprecher 1 $\rightarrow$ Mikrofon 2 im Intervall $0 \leq t < t_{ak}$ den Wert Null hat. Die Wirkung des FIR-Filters 5 wird zeitlich begrenzt durch das Verhältnis von Anzahl N der Filterkoeffizienten und Abtastfrequenz $f_s$,

$$t_{max} = \frac{N}{f_s},$$

so daß Echos innerhalb eines Zeitfensters $t_{ak} < t < t_{max}$ erfaßt werden, z.B. N = 132, $f_s$ = 32 kHz, $t_{max}$ = 4,125 ms.

Die Filterkoeffizienten $c_1$ bis $c_N$ werden nach dem NLMS-Algorithmus berechnet:

$$c_j(k+1) = c_j(k) + \alpha \; \frac{y(k) \; x(k-j)}{\sum\limits_{i=0}^{N-1} x^2(k-i)} \qquad (Gl. \; 1)$$

mit j = 1...$j_{ak}$...N und $j_{ak}$ = $t_{ak} \cdot f_s$, wobei die $c_1...c_{ak}$ = 0 sind.

In Gl. 1 bedeuten

| | |
|---|---|
| k | fortlaufender Index zeitlich aufeinanderfolgender Abtastwerte |
| $c_j(k+1)$ | neu zu berechnender Filterkoeffizient Nr. j zur Zeit (k+1) |
| $c_j(k)$ | Filterkoeffizient Nr. j zur Zeit k |
| $\alpha$ | Schrittweite |
| y(k) = z(k)-h(k) | Abtastwert des Mikrofonsignals z(k) abzüglich des Ausgangssignals h(k) zur Zeit k des FIR-Filters 5 |
| x(k-j) | Abtastwert des Lautsprechersignals zur Zeit (k-j) |
| x(k-i) | Abtastwert des Lautsprechersignals zur Zeit (k-i) |
| N | Anzahl der Filterkoeffizienten |
| $j_{ak}$ | Grundverzögerung entsprechend $t_{ak}$ |
| j | Index für zeitliche Verschiebung; fortlaufender Index der Koeffizienten $c_j$ |
| i | Index für zeitliche Verschiebung um Zeitbetrag $t_{ak}$ |

Die Schrittweite $\alpha$ ist ein Maß für die Änderung der Filterkoeffizienten $c_1$ bis $c_N$ nach einer Neuberechnung. Um überhaupt eine Koeffizienten-Adaptation an das Echosignal zu erreichen, muß $\alpha > 0$ sein; ferner muß $\alpha < 2$ sein, um eine Instabilität und Überkompensation zu vermeiden. Überkompensation bedeutet eine Mitkopplung des Ausgangssignals des FIR-Filters 5 mit dem Mikrofonsignal anstelle einer gewünschten Gegenkopplung; die Echos würden verstärkt werden. Wird die Schrittweite $\alpha$ groß gewählt, so ändern sich zwar die Filterkoeffizienten $c_1$ bis $c_N$ sehr schnell, aber es besteht die Gefahr einer Überkompensation. Bei kleiner Schrittweite $\alpha$ ist die Gefahr einer Fehleinstellung geringer, aber es vergeht eine längere Zeit, bis die Filterkoeffizienten $c_1$ bis $c_N$ an eine Veränderung des Raumechos angepaßt werden.

Eine Fehlberechnung der Filterkoeffizienten $c_1$ bis $c_N$ erfolgt a) beim Gegensprechen, d.h. beide Gesprächspartner sprechen gleichzeitig und b) während der Gesprächspausen, da dann auf das Rauschen des Verstärkers adaptiert wird. In diesen Fällen würde das FIR-Filter so falsch eingestellt werden, daß die Rückhördämpfung vom Lautsprecher 1 zum Mikrofon 2 durch den Echokompensator verschlechtert wird.

Erfindungsgemäß werden die Filterkoeffizienten $c_1$ bis $c_N$ bei Änderungen der Impulsantwort, das bedeutet beispielsweise bei veränderter Lage von Lautsprecher 1 oder Mikrofon 2 oder bei stark veränderten Umgebungsbedingungen, schnell geändert; bei gut eingestelltem Echokompensator oder bei unsicheren Messungen werden sie langsamer geändert. Dies wird dadurch erreicht, daß die Schrittweite $\alpha$ gesteuert wird a) in Abhängigkeit von der nach dem Echokompensator verbleibenden Lautsprecher-Mikrofon-Kopplung dlm, b) von der Qualität Q der Anregung, c) vom Vorhandensein lokaler Sprachsignale lokspk, d) vom Vorhandensein lokaler kurzzeitig schwankender Geräusche lnoise und e) von der Erkennung einer Überkompensation loss. Somit wird zunächst

$$\alpha\ f(dlm,\ Q,\ lokspk,\ lnoise,\ loss) \tag{Gl. 2}$$

Mit einer solchen adaptiven Schrittweite $\alpha$ ist es möglich, den Echokompensator bei unterschiedlichen Umgebungsbedingungen und bei wesentlich unterschiedlichen geometrischen Anordnungen von Lautsprecher 1 und Mikrofon 2 einzusetzen. So kann die Echokompensation sowohl bei kritischen Anordnungen, wie beim Schmalbandtelefon, als auch in Konferenzstudios eingesetzt werden.

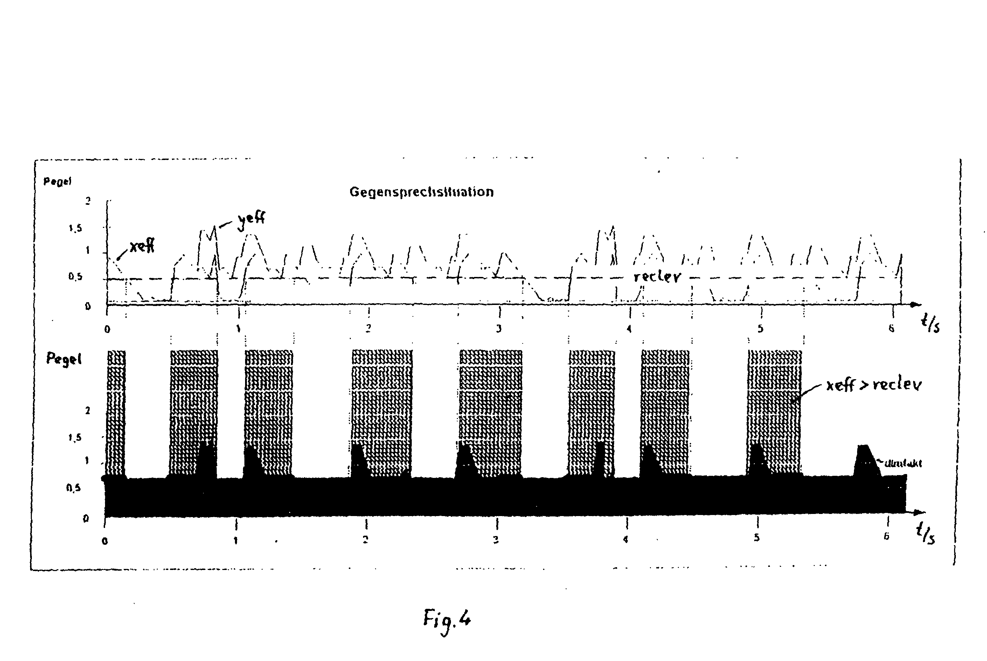

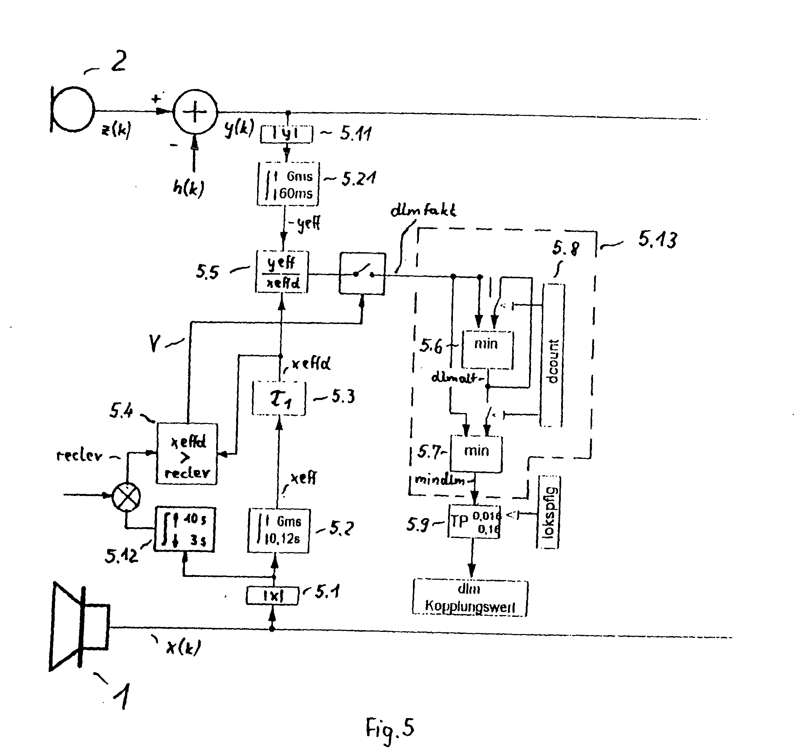

Unter Zuhilfenahme der Fig. 4 und der Fig. 5 wird nunmehr die Bestimmung der Lautsprecher-Mikrofon-Kopplung dlm und die Abhängigkeit der Schrittweite $\alpha$ von der Lautsprecher-Mikrofonkopplung dlm beschrieben.

Wesentlich ist, daß eine Schätzung der Kopplung Lautsprecher-Mikrofon dlm nach dem Echokompensator erfolgt, um beurteilen zu können, welchen Gewinn der Echokompensator momentan erreicht hat. Deswegen wird hier präziser von der Schätzung einer Restkopplung nach dem Echokompensator vom Empfangsweg auf den Sendeweg gesprochen.

Gemäß Fig. 5 wird zunächst aus dem Zeitsignal y(k) am Mikrofon 2 durch Betragsbildung 5.11 und folgende Integration 5.21 der Kurzzeitpegel des Mikrofonsignals yeff ermittelt. In gleicher Weise wird aus dem Zeitsignal x(k) am Lautsprecher 1 durch Betragsbildung 5.1 und folgende Integration 5.2 der Kurzzeitpegel des Lautsprechersignals xeff ermittelt. Entsprechend wird aus dem Zeitsignal x(k) am Lautsprecher 1 durch Betragsbildung 5.1 und Integration 5.12 der Langzeitmittelwert des Empfangspegels reclev ermittelt. Um die zeitlich richtige Zuordnung des Kurzzeitpegels des Mikrofonsignals yeff zu dem Kurzzeitpegel des Lautsprechersignals xeff zu erhalten, muß der Kurzzeitpegel des Lautsprechersignals xeff mindestens um die akustische Signallaufzeit $t_{ak}$ verzögert werden, so daß die zeitlichen Verzögerungen auf dem Weg vom Lautsprecher 1 zum Mikrofon 2 sowie die Verzögerungen der Wandler ausgeglichen werden. Der Kurzzeitpegel des Lautsprechersignals xeff wird durch eine Verzögerungsschaltung 5.3 verzögert und liefert das verzögerte Signal xeffd. Nunmehr wird gemäß

$$\frac{yeff}{xeffd} = dlmfakt \tag{Gl.3}$$

mit einem Quotientenbildner 5.5 aus den so erhaltenen Signalen ein Quotient gebildet, der ein Kopplungssignal dlmfakt liefert. Dieses Kopplungssignal dlmfakt ist insbesondere durch lokale Schalle, wie beispielsweise Gegensprechen, fehlerbehaftet und ist in dieser Form noch nicht als Maß für die Lautsprecher-Mikrofon-Kopplung dlm geeignet. Fig. 4 zeigt im unteren Teil den zeitlichen Verlauf des Kopplungssignals dlmfakt für eine Gegensprechsituation. Zunächst werden nur solche Kopplungssignale dlmfakt weiter ausgewertet, für die der verzögerte Kurzzeitpegel des Lautsprechersignals xeffd größer als der Langzeitmittelwert des Empfangspegels reclev ist. Die Division nach Gl. 3 liefert im Fall ohne Gegensprechen immer kleinere Werte als beim Gegensprechen. Gegensprechen tritt jedoch zeitlich begrenzt auf, weil der lokale Sprecher wie auch der ferne Sprecher beim Sprechen Wort- und Satzpausen einlegen. Werden nun nur die kleinsten Werte der Divisionsergebnisse innerhalb eines Zeitintervalls, beispielsweise 5s, zur Bestimmung der Lautsprecher-Mikrofon-Kopplung dlm verwendet, ist eine sehr hohe Wahrscheinlichkeit für eine korrekte Messung gegeben. Um den kleinsten Wert des Kopplungssignals dlmfakt zu bestimmen, wird dieses Kopplungssignal dlmfakt einem ersten Minimalwertdetektor 5.13 zugeführt. Der erste Minimalwertdetektor 5.13 besteht aus einer ersten Speicher- und Vergleichsschaltung 5.6 und einer dieser nachgeschalteten zweiten Speicher- und Vergleichsschaltung 5.7 sowie aus einem Zähler 5.8.

Während eines von dem Zähler 5.8 bestimmten Zeitintervalls, wird das Ausgangssignal dlmalt der ersten Speicher- und Vergleichsschaltung 5.6 ständig auf den kleineren Wert von dlmalt und dlmfakt erneuert und sucht so den kleinsten Wert im Zeitintervall. Bei Rückstellung des Zählers 5.8 wird dieser Wert dlmalt von der zweiten Speicher- und Vergleichsschaltung 5.7 übernommen, während das Ausgangssignal dlmalt der ersten Speicherund Vergleichsschaltung 5.6 auf das aktuelle Kopplungssignal dlmfakt eingestellt wird, um erneut nach dem kleinsten Wert im folgenden Zeitintervall zu suchen. Mit der zweiten Speicher- und Vergleichsschaltung 5.7 wird der Momentanwert des Kopplungssignals dlmfakt mit dem gespeicherten Ausgangssignal dlmalt der ersten Speicher- und Vergleichsschaltung 5.6 verglichen. Die zweite Speicher- und Vergleichsschaltung 5.7 übernimmt jeweils den kleineren Wert, um somit möglichst schnell den kleinstmöglichen Wert mindlm zu finden. Das Ausgangssignal mindlm der zweiten Speicher- und Vergleichsschaltung 5.7 wird mit einem Tiefpaß 5.9 gefiltert und liefert dann die beste Schätzung für die Lautsprecher-Mikrofon-Kopplung dlm. Mögliche Fehler bei der Schätzung dieses Wertes werden durch die zeitliche Mittelwertbildung mittels der Integratoren 5.2 und 5.21 und durch die Filterung mittels eines Tiefpasses 5.9 sowie durch die Auswertung des kleinsten Kopplungssignals dlmfakt verringert. Wird die Verzögerung $\tau_1$ des Kurzzeitpegels des Lautsprechersignals xeff durch die Verzögerungsschaltung 5.3 exakt eingestellt, kann die Tiefpaßfilterung mit erheblich höherer Grenzfrequenz erfolgen und

damit eine schnellere Anpassung des Schätzwertes an die aktuelle Lautsprecher-Mikrofon-Kopplung dlm vorgenommen werden.

In Abhängigkeit von der geschätzten Lautsprecher-Mikrofon-Kopplung dlm wird die in Gl. 1 enthaltene Schrittweite $\alpha$ nach folgender Funktion eingestellt:

$$\alpha = f(dlm, Q, lokspk, lnoise, loss)$$

$$= k_1 |dlm - \in_1|^P \cdot g_1(Q, lokspk, lnoise, loss) \qquad (Gl.4)$$

Dabei bedeuten

dlm    geschätzte aktuelle Lautsprecher-Mikrofon-Kopplung
$k_1$    Konstante
$\in_1$    Arbeitspunkteinstellung
p    Exponent der Funktion

Es ist weiterhin möglich, die Einstellgeschwindigkeit und die Einstellgenauigkeit der Filterkoeffizienten $c_1$... $c_N$ von einem Qualitätsmaß Q abhängig zu machen.
Um Fehleinstellungen des Echokompensators auf ein Minimum zu reduzieren, werden die Filterkoeffizienten $c_1...c_N$ des FIR-Filters 5, vgl. Fig. 3, nur dann erneuert, wenn eine Mindestqualität bezüglich des Empfangssignals, also der Anregung des Lautsprechers, vorliegt, zum Beispiel wenn der Kurzzeitpegel xeff des Empfangssignals x(k) einen bestimmten Sollwert reclev überschreitet. Das Vorzeichen der Differenz (xeff-reclev) = V bestimmt, ob die Filterkoeffizienten $c_1...c_N$ erneuert werden dürfen, falls V > 0 ist, oder ob die Filterkoeffizienten $c_1...c_N$ ihren Wert behalten, falls V < 0 ist. In diesem Fall wäre Q = 1/2 (1 + sign V). Es ist durchaus möglich, für das Qualitätsmaß Q auch andere Funktionen sinngemäß zu definieren, wobei das
Qualitätsmaß Q vorteilhafterweise Werte zwischen 0 und 1 annehmen kann. Beispielsweise könnte Q die Stärke und die Signalform der Anregung bewerten, wie in Fig. 3 gezeigt, dann ist Q = f(xeffd). Für $\alpha$ ergibt sich nunmehr folgende Funktion:

$$\alpha = k_1 (dlm - \in_1)^P \cdot Q^m \cdot g_2 (lokspk, lnoise, loss)$$

$$= k_1 (dlm - \in_1)^P \cdot [1/2 (1 + sign V)]^m \cdot$$

$$g_2 (lokspk, lnoise, loss), \text{ mit } m = 1 \qquad (Gl.5)$$

In Fig. 3 ist ein Filter 6 zur Bestimmung des Qualtitätsmaßes Q dargestellt. Mit diesem Filter 6 können auch komplexere Bewertungsfunktionen für Q realisiert werden, zum Beispiel können die Abtastwerte des Lautsprechersignals x(k) ständig dahingehend überwacht werden, ob ein starkes breitbandiges Signal, rauschähnlich oder impulsförmig, vorliegt, das für eine schnelle und genaue Bestimmung der Filterkoeffizienten $c_1$ bis $c_N$ geeignet ist. Eine starke Anregung, beispielsweise Händeklatschen, auf einer Seite der Gesprächspartner und Stille auf der anderen Seite wäre damit besonders geeignet, rasch eine gewünschte Einstellung des Echokompensators zu provozieren.
Für den Fall, daß der lokale Sprecher aktiv ist, soll die Schrittweite $\alpha$ nur sehr kleine Werte annehmen, um eine Fehleinstellung des Echokompensators zu vermeiden. Andererseits darf $\alpha$ nicht Null sein, damit eine Änderung der lokalen akustischen Situation trotz Gegensprechen vom Echokompensator noch erfaßt werden kann.
Es gibt mehrere Möglichkeiten, um zu erkennen, wann der lokale Sprecher spricht. In der deutschen Patentanmeldung P 43 05 256.8 ist beispielsweise vorgeschlagen worden, eine Korrelation zwischen dem Mikrofonsignal z (k) und dem verzögerten Zeitsignal x(k-$\tau$) am Lautsprecher 1 durchzuführen, um bei niedrigen Korrelationswerten auf einen aktiven lokalen Sprecher zu schließen.
Es ist auch möglich, den Kurzzeitpegel des Mikrofonsignals yeff mit dem mit dem Kopplungsfaktor dlm gewichteten Kurzzeitpegel des Empfangssignals xeff zu vergleichen, um zu schätzen, ob der lokale Sprecher aktiv ist. Ein so gewonnenes Steuersignal lokspk zeigt mit der Wertigkeit Eins an, daß lokal gesprochen wird und mit der Wertigkeit Null, daß lokal nicht gesprochen wird.
Damit läßt sich die Schrittweite wie folgt berechnen:

$$\alpha = k_1 |dlm - \in_1|^P \cdot Q^m \cdot |1 - lokspk + \in_2| \cdot$$

$$g_3 \text{ (lnoise, loss)} \tag{Gl. 6}$$

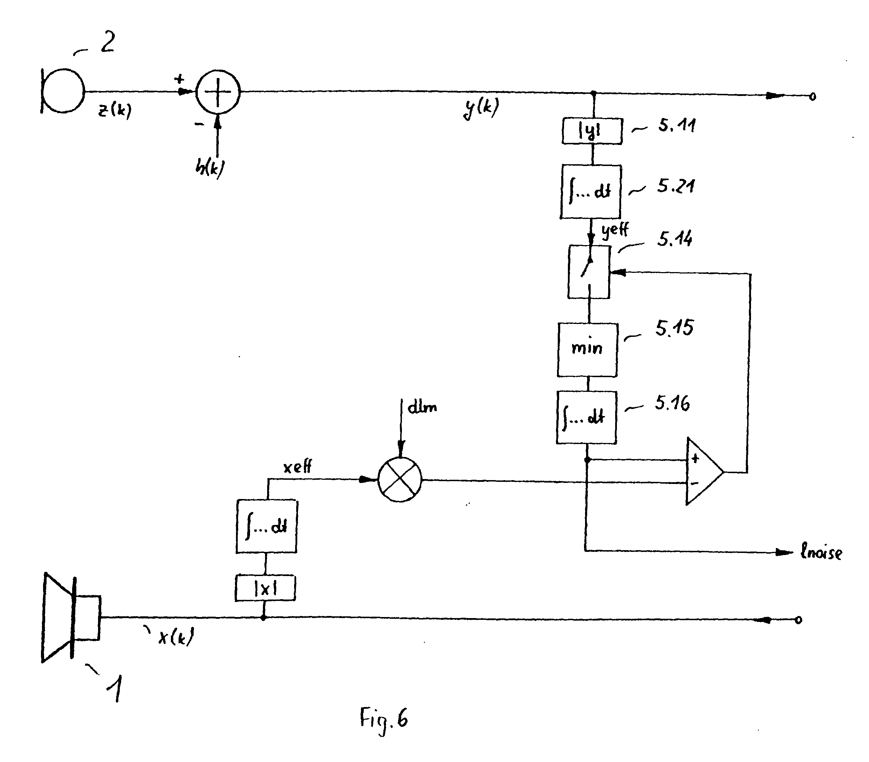

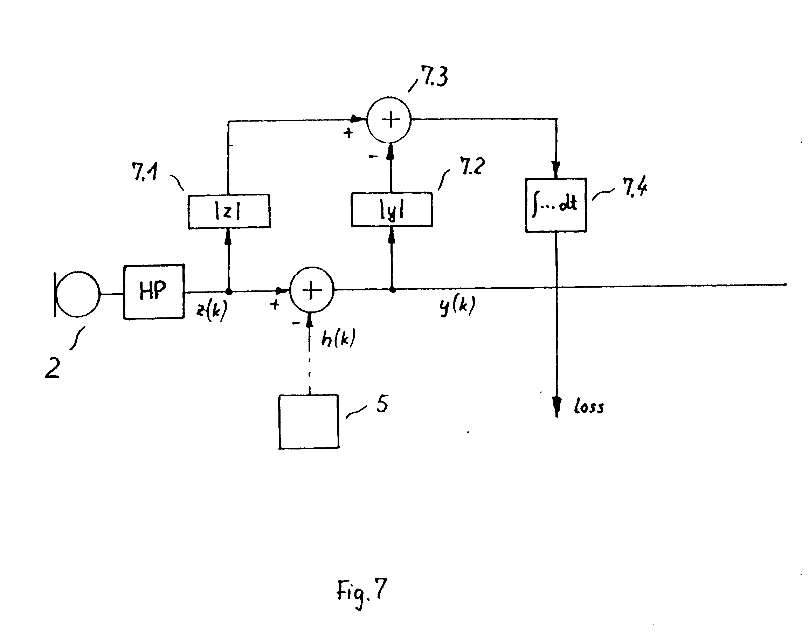

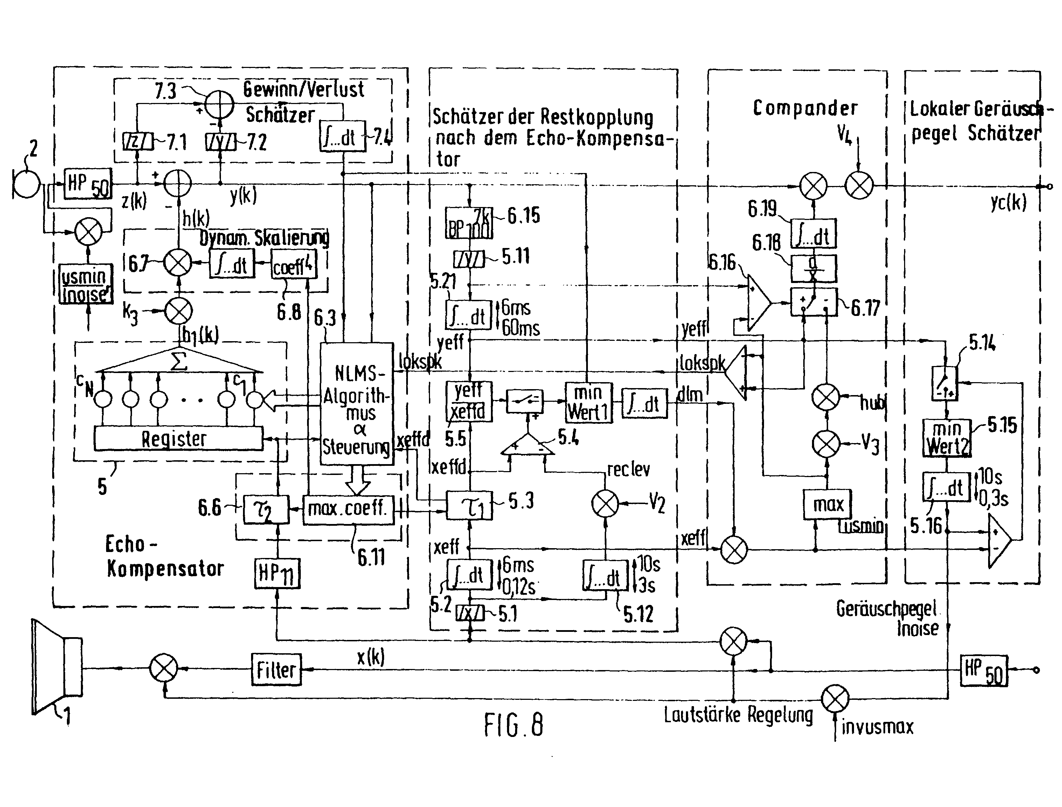

Ferner wird die Schrittweite $\alpha$ der lokalen Geräuschsituation angepaßt. Dazu wird das lokale Geräusch zunächst mit einem lokalen Geräuschpegelschätzer ermittelt. Fig. 6 zeigt das Prinzipschaltbild des Geräuschpegelschätzers. Aus dem kompensierten Mikrofonsignal y(k) wird zunächst mit einem Betragsbildner 5.11 und einem Integrator 5.21 der Kurzzeitpegel des Mikrofonsignals yeff bestimmt. Dieses Pegelsignal wird über einen Schalter 5.14 auf einen zweiten Minimalwertdetektor 5.15 gegeben, der vom Prinzip her wie der bereits beschriebene erste Minimalwertdetektor 5.13 arbeitet. Das Ausgangssignal des zweiten Minimalwertdetektors 5.15 ergibt über einen Integrator 5.16 den Schätzwert für den Geräuschpegel lnoise. Über den Schalter 5.14 werden die Signalanteile aus dem Kurzzeitpegel des Mikrofonsignals yeff von der weiteren Verarbeitung ausgeblendet, die durch ein Empfangssignal vom fernen Sprecher ein lokales Geräusch vortäuschen können. Dazu wird der gerade geschätzte Geräuschpegel mit dem mit dem Kopplungsfaktor dlm bewerteten Kurzzeitpegel des Lautsprechersignals xeff verglichen. Ist der Geräuschpegel größer, so bleibt der Schalter 5.14 geschlossen.

Wird in einem Freisprechsystem die lokale Wiedergabelautstärke abhängig von einer lokalen Geräuschmessung geregelt, dann verschlechtert sich der Signal-Geräuschabstand des lokalen Echos nicht um den vollen Betrag des Geräuschanstiegs, sondern um einen geringeren Betrag. Entsprechend gering kann der Einfluß des Hintergrundgeräusches auf die Steuerung der Schrittweite $\alpha$ sein. Bezüglich der Schrittweite $\alpha$ soll ein geringer Geräuschpegel minnoise kaum einen Einfluß auf die Schrittweite $\alpha$ haben, wogegen mit zunehmendem Geräusch die Schrittweite $\alpha$ stetig kleiner wird. Damit wird

$$\alpha = k_1 |dlm - \in_1|^P \bullet Q^m |1 - lokspk + \in_2|$$

$$\bullet \text{ (minnoise/lnoise)}^r + g_4 \text{ (loss)} \tag{Gl. 7}$$

In praktischen Fällen ist es möglich, daß bei gut abgeglichenem Echokompensator die akustische Umgebung sich rasch ändert. Dann ist die Schrittweite $\alpha$ sehr klein und der Echokompensator benötigt eine lange Zeit, um sich erneut einzustellen. Um diesen Nachteil zu vermeiden, wird zunächst eine Einrichtung vorgesehen, mit der der durch den Echokompensator kurzzeitig erzielte Gewinn oder Verlust bestimmt werden kann. Das Ergebnis dieser Gewinn/Verlust-Schätzung kann dann vorteilhafterweise die Schrittweite $\alpha$ beeinflussen.

Fig. 7 zeigt das Blockschaltbild eines Gewinn/Verlust-Schätzers. Das Mikrofonsignal z(k) wird über einen ersten Betragswertbildner 7.1 und das kompensierte Mikrofonsignal y(k) über einen zweiten Betragswertbildner 7.2 auf einen Subtrahierer 7.3 gegeben, dessen Ausgangssignal über einen Integrator 7.4 die gewünschte Gewinn/Verlustanzeige mit dem Signal loss liefert. Solange das Signal loss positiv ist, solange trägt der Echokompensator zu einem Gewinn bei. Wenn das Signal loss negativ wird, wird eine durch den Echokompensator verursachte Überkompensation angezeigt.

Von den Möglichkeiten, diese Information zur Steuerung des Echokompensators zu verwenden, wird im folgenden die Steuerung der Schrittweite $\alpha$ erläutert.

Wenn das Signal loss negativ ist und damit eine Veränderung der akustischen Umgebung anzeigt, so soll die Schrittweite $\alpha$ möglichst groß werden, um eine rasche Adaption an die neue Situation zu ermöglichen. Dabei haben die Parameter Lautsprecher-Mikrofon-Kopplung dlm, lokaler Sprecher aktiv/inaktiv lokspk und lokales Geräusch vorhanden/fehlend lnoise einen geringeren Einfluß, so daß sich für die Schrittweite folgende Gleichung ergibt:

$$\alpha = k_1 |dlm - \in_1|^P \bullet Q^m \bullet |1 - lokspk + \in_2| \bullet$$

$$\text{(minnoise/lnoise)}^r + k_2 \text{ (1-sign(loss))} \bullet Q^m \tag{Gl. 8}$$

Wenn das Signal loss negativ wird, kann sofort der Wert für die Lautsprecher-Mikrofonkopplung dlm aktualisiert werden.

Durch die Wahl der Exponenten p, m, r wird die Empfindlichkeit der Schrittweite $\alpha$ von den Basisparametern festgelegt. Werden für p, m, r Zahlen kleiner eins gewählt, so wird der Einfluß des zugehörigen Parameters auf die Schrittweite $\alpha$ stark vermindert. Der zuvor beschriebene Echokompensator kann vorteilhafterweise mit einem Kompander kombiniert werden, der zum Zweck einer adaptiven Freisprecheinrichtung in der deutschen Patentanmeldung P 43 05 256.8 beschrieben ist und ferner in Walker, M.: Freisprechen-Ein Schritt zur natürlichen Telekommunikation, Elektrisches Nachrichtenwesen, 2. Quartal 1993, Seite 181-187.

Fig. 8 zeigt ein Blockschaltbild, durch das das Freisprechverfahren zusammenfassend beschrieben wird. Entsprechend ihrer Funktion sind die einzelnen Blöcke bezeichnet mit Echokompensator, Schätzer der Restkopplung nach dem Echokompensator wie bereits getrennt in Fig. 5 dargestellt und zuvor beschrieben, Kompander, lokaler Geräuschpegelschätzer sowie mit Filter zur Ebnung des Lautsprecherfrequenzganges. Der Echokompensator besteht im wesentlichen aus dem FIR-Filter 5, mit dem das Echosignal h(k) aus dem Empfangssignal x(k) nachgebildet und von dem Mikrofonsignal z(k) in einer Subtrahierschaltung 6.2 subtrahiert wird. Die Filterkoeffizienten $c_1...c_N$ des FIR-Filters 5 werden im Adaptionsblock 6.3 berechnet. Durch die variierbare Schrittweite $\alpha$ wird erreicht, daß die Einstellung der Filterkoeffizienten $c_1...c_N$ schnell und weitgehend fehlerfrei erfolgt. Die Steuerung der Schrittweite $\alpha$ erfolgt wie oben beschrieben.

Dem FIR-Filter 5 ist eine variable Verzögerungsleitung 6.6 vorgeschaltet, die die Zeit, die der Schall vom Lautsprecher 1 zum Mikrofon 2 benötigt, überbrückt, um die Filterlänge N des FIR-Filters 5 auf die eigentlichen Echos zu begrenzen.

Zur Optimierung der Rechengenauigkeit der Filterkoeffizienten $c_1...c_N$ wird das Ausgangssignal $h_1(k)$ des FIR-Filters 5 zunächst mit einem konstanten Faktor $v_1$ verstärkt und anschließend in einem 32 Bit breiten Akkumulator 6.7 mit der zeitlich integrierten n-ten Potenz des größten vorkommenden Filterkoeffizienten multipliziert. Die Filterkoeffizienten werden bei dem verwendeten preisgünstigen Festkommarechner lediglich mit einer Auflösung von 16 Bit gespeichert. Durch die Multiplikation mit der zeitlich integrierten n-ten Potenz des größten Koeffizientenwerts, beispielsweise mit n = 4, wird erreicht, daß die Koeffizienten des FIR-Filters in Echtzeit dynamisch optimal skaliert werden, sodaß erstmals mit einem Festkommarechner vorteilhafterweise im wesentlichen der gleiche Gewinn wie mit einem sehr viel teuereren Gleitkommarechner erreicht wird. Damit ist der Einsatz des Echokompensators sowohl bei Fernsprechapparaten mit einer Rückhördämpfung zwischen Lautsprecher und Mikrofon von beispielsweise -28dB als auch in Studios mit einer Rückhördämpfung von beispielsweise 8dB möglich.

Aus der Lage des größten Koeffizienten im Register kann die einzustellende Verzögerungszeit $\tau_2$ der Verzögerungsschaltung 6.6 ermittelt werden.

Im Block Kompander der Fig. 8 wird die Kompanderkennlinie eingestellt. Durch den Kompander werden die vom Mikrofon 2 gelieferten Signale soweit sie über einem Sollwert liegen, auf einen einheitlichen Signalpegel komprimiert, soweit sie den Sollwert aufweisen bleiben sie unverändert und soweit sie unter dem Sollwert liegen, werden sie weiter im Pegel abgesenkt. Für die Auswertung des Mikrofonpegels wird das kompensierte Mikrofonsignal y(k) mit einem Bandpaß 6.15 von nieder- und hochfrequenten Störschallen, wie Trittschall und Rumpelgeräusche, befreit und damit der für das menschliche Ohr empfindliche Frequenzbereich herausgefiltert. Nach Betragsbildung 5.11 wird aus dem kompensierten Mikrofonsignal y(k) der Effektivwert yeff mit dem Integrator 5.21 gebildet. Die Zeitkonstanten sind an das Verhalten des menschlichen Ohres angepaßt.

Der Verstärkungswert muß im Bereich der Kompression proportional mit zunehmendem und im Bereich der Expansion überproportional mit abnehmendem Eingangspegel abgesenkt werden. Der Übergang der Bereiche wird in einem Komparator 6.16 durch Vergleich eines Schwellensignals us mit dem Betrag des kompensierten Mikrofonsignals | y(k)| gesteuert. Dabei ist das Schwellensignal us das Maximum des geschätzten Geräuschpegels lnoise oder der mit dem Kopplungsfaktor dlm bewertete Kurzzeitpegel des Lautsprechersignals xeff.

Zur Berechnung des Verstärkungsfaktors wird zwischen den Bereichen Kompression und Expansion mittels eines Schalters 6.17 umgeschaltet. Überschreitet der Betrag des kompensierten Mikrofonsignals | y(k)| den Schwellenwert us, was im Komparator 6.16 festgestellt wird, muß die Division im Schaltungsblock 6.18 mit dem Effektivwert des Lautsprechersignals xeff durchgeführt werden. Bei kleinen Eingangssignalen, die gerade den Schwellenwert us überschreiten, erreicht der Betrag des kompensierten Mikrofonsignals | y(k)| innerhalb einer Periode nur kurz die Schwelle, wogegen bei großen Signalen | y(k)| nur noch die Nulldurchgänge unterhalb der Schwelle liegen. Durch die nachfolgende Integration im Integrator 6.19 wird das Divisionsergebnis gemittelt. Dadurch ergibt sich ein sanfter Übergang zwischen den Bereichen Kompression und Expansion und damit eine gewünschte Restdynamik von etwa 10dB.

Da der Zahlenbereich des Festkommaprozessors auf kleiner als eins begrenzt ist, darf das Ergebnis der Division in keinem Fall größer als eins sein. Es wird ein Normierungsgröße a verwendet, die diese Bedingung für den größten vorkommenden Verstärkungswert erfüllt. Für a wird 1/1024 gewählt.

**Patentansprüche**

1. Verfahren zur adaptiven Echokompensation in einem Übertragungssystem, das einen Echokompensator mit einem Finite Impulse Response-Filter (5), kurz FIR-Filter, enthält, mit dem die zu erwartenden Echos nachgebildet werden und dessen Ausgangssignal von dem echobehafteten Signal subtrahiert wird, wobei die Filterkoeffizienten $(c_1...c_N)$ des FIR-Filters (5) nach einem Normalized Least Mean Square Algorithmus, kurz NLMS-Algorithmus, bestimmt werden, **dadurch gekennzeichnet,**
daß die im NLMS-Algorithmus eingefügte Schrittweite ($\alpha$) in Abhängigkeit von den Umgebungsbedingungen von Signalquelle (1) und Signalsenke (2) am nahen Ende des Übertragungssystems, in Abhängigkeit von den die Nutzsignale überlagernden störenden Einflußgrößen und in Abhängigkeit vom Wirkungsgrad des Echokompensators gesteuert wird,

**daß** jeweils aus dem Wert des größten Filterkoeffizienten ($c_{max}$) des FIR-Filters (5) eine Normierungsgröße für das FIR-Filter und damit für alle Filterkoeffizienten ($c_1...c_N$) des FIR-Filters (5) derart bestimmt wird, daß die Werte der Filterkoeffizienten ($c_1...c_N$) automatisch dynamisch skaliert werden und der Wertebereich innerhalb definierter Grenzen liegt und daß aus dem zeitlichen Abstand des größten Filterkoeffizienten ($c_{max}$) des FIR-Filters (5) vom Beginn der Anregung des Signals in Senderichtung die kürzeste Signallaufzeit ($t_{ak}$) von der Signalquelle (1) zu der Signalsenke (2) ermittelt wird, daraus der wirksame Zeitbereich des Echokompensators bestimmt wird und diese Information zur Schätzung der verbleibenden Restkopplung verwendet wird.

2. Verfahren nach Anspruch 1, **dadurch gekennzeichnet, daß** die Schrittweite ($\alpha$) in Abhängigkeit von einem nach dem Echokompensator verbleibendem aktuellen Kopplungswert (dlm) zwischen Signalquelle (1) und Signalsenke (2) derart bestimmt wird, daß mit steigendem Kopplungswert (dlm) die Schrittweite ($\alpha$) zunimmt.

3. Verfahren nach Anspruch 1, **dadurch gekennzeichnet, daß** die Schrittweite ($\alpha$) in Abhängigkeit von einem Qualitätsmaß (Q) gesteuert wird, das aus der Differenz des Kurzzeitpegels des Signals (x(k)) der Signalquelle (1) und einem definierten Sollwert (reclev) bestimmt wird und daß bei positivem Vorzeichen der Differenz die Schrittweite ($\alpha$) positiv wird und damit die Filterkoeffizienten ($c_1...c_N$) erneuert werden und daß bei negativem Vorzeichen der Differenz das Qualitätsmaß Q und die Schrittweite ($\alpha$) Null werden und damit die Filterkoeffizienten ($c_1...c_N$) ihre Werte beibehalten.

4. Verfahren nach Anspruch 1, **dadurch gekennzeichnet, daß** die Schrittweite ($\alpha$) in Abhängigkeit von einem lokalen, dem Signal der Signalsenke (2) am nahen Enden des Übertragungssystems überlagerten Signal, beispielsweise in Abhängigkeit eines akustischen Signals eines lokalen Sprechers, gesteuert wird, indem der Kurzzeitpegel (z(k)) des Signals der Signalsenke (2) mit dem Kurzzeitpegel (x(k)) des Signals der Signalquelle (1) verglichen wird und aus dem Vergleichsergebnis ermittelt wird, ob eine zusätzliche lokale Signalquelle aktiv ist oder nicht und daß mit zunehmendem Pegel der lokalen Signalquelle (lokspk) die Schrittweite ($\alpha$) verringert wird.

5. Verfahren nach Anspruch 1, **dadurch gekennzeichnet, daß** die Schrittweite ($\alpha$) in Abhängigkeit von einem Hintergrundgeräusch des Raumes, in dem sich die Signalquelle (1) und die Signalsenke (2) befinden, derart gesteuert wird, daß bei einem geringen Geräuschpegel (minnoise) die Schrittweite ($\alpha$) unverändert bleibt und daß mit zunehmendem Geräuschpegel (lnoise) die Schrittweite ($\alpha$) stetig kleiner wird.

6. Verfahren nach Anspruch 1, **dadurch gekennzeichnet, daß** die Schrittweite ($\alpha$) von einer Steuergröße abhängig ist, die aus der Differenz des echobehafteten Kurzzeitpegels (z(k)) des Signals der Signalsenke (2) und dem Kurzzeitpegel (y(k)) des echokompensierten Signals der Signalsenke (2) gebildet wird, daß ein positives Vorzeichen der Differenz anzeigt, daß der Echokompensator einen Gewinn bringt und damit die Schrittweite ($\alpha$) beibehalten wird, daß ein negatives Vorzeichen der Differenz anzeigt, daß der Echokompensator einen Verlust erzeugt und daß dann die Schrittweite ($\alpha$) unabhängig von weiteren Einflußgrößen vergrößert wird.

7. Verfahren nach Anspruch 1, **dadurch gekennzeichnet, daß** als Signalquelle ein Lautsprecher (1) und als Signalsenke ein Mikrofon (2) dient und daß der Echokompensator Teil einer Freisprecheinrichtung eines Telekommunikationsendgerätes ist.

8. Verfahren nach Anspruch 1, **dadurch gekennzeichnet, daß** der aktuelle Kopplungswert (dim) mit einem ersten Minimalwertdetektor (5.13) ermittelt wird, bei dem in einer ersten Speicher- und Vergleichsschaltung (5.6) in einem durch einen Zähler (5.8) festgelegten Zeitintervall der kleinste Kopplungswert (dlmalt) ermittelt und einer zweiten Speicher- und Vergleichsschaltung (5.7) übergeben wird, die jeweils den Momentanwert des Kopplungssignals (dlmfakt) mit dem von ihr gespeicherten kleinsten Kopplungswert (dlmalt) der ersten Speicher- und Vergleichsschaltung (5.6) vergleicht, um einen absolut minimalen Kopplungswert (mindlm) zu finden.

9. Verfahren nach Anspruch 1, **dadurch gekennzeichnet, daß** die Steuerung der Schrittweite ($\alpha$) und die dynamische Skalierung der Filterkoeffizienten ($c_1...c_N$) eine Realisierung des Verfahrens mit einem FIR-Filter (5) kurzer Filterlänge (N) und mit einem Festkommarechner ermöglicht.

**Claims**

1. Method of adaptive echo compensation in a transmission system, containing an echo compensator with a Finite Impulse Response filter (5), FIR filter for short, using which the echoes to be expected are imitated, and the output signal of which is subtracted from the signal which is affected by the echo, the filter coefficients ($c_1$ ... $c_N$) of the FIR filter (5) being determined according to a Normalized Least Mean Square algorithm, NLMS algorithm for short, **characterized in that**
the step width ($\alpha$) which is inserted in the NLMS algorithm is controlled depending on the ambient conditions of the signal source (1) and signal sink (2) at the near end of the transmission system, depending on the influencing quantities which overlay and interfere with the useful signals, and depending on the efficiency of the echo compensator,
that from the value of the greatest filter coefficient ($c_{max}$) of the FIR filter (5), a normalisation value for the FIR filter and thus for all filter coefficients ($c_1$ ... $c_N$) of the FIR filter (5) is determined, in such a way that the values of the filter coefficients ($c_1$ ... $c_N$) are automatically dynamically scaled and the value range is within defined limits, and
that from the time gap of the greatest filter coefficient ($c_{max}$) of the FIR filter (5) from the start of the excitation of the signal in the outgoing direction, the shortest signal transit time ($t_{ak}$) from the signal source (1) to the signal sink (2) is determined, the effective time range of the echo compensator is determined from it, and this information is used to estimate the residual coupling.

2. Method according to Claim 1, **characterized in that** the step width ($\alpha$) is determined depending on a residual current coupling value (dlm), after the echo compensator, between signal source (1) and signal sink (2), in such a way that the step width ($\alpha$) increases as the coupling value (dlm) increases.

3. Method according to Claim 1, **characterized in that** the step width ($\alpha$) is controlled depending on a quality measurement (Q), which is determined by the difference of the short-term level of the signal ($x(k)$) of the signal source (1) and a defined setpoint value (reclev), and that if the sign of the difference is positive, the step width ($\alpha$) becomes positive, and thus the filter coefficients ($c_1$ ... $c_N$) are renewed, and that if the sign of the difference is negative, the quality measurement Q and step width ($\alpha$) become zero, and thus the filter coefficients ($c_1$ ... $c_N$) retain their values.

4. Method according to Claim 1, **characterized in that** the step width ($\alpha$) is controlled depending on a local signal which is overlaid over the signal of the signal sink (2) at the near end of the transmission system, for instance depending on an acoustic signal of a local speaker, the short-term level ($z(k)$) of the signal of the signal sink (2) being compared with the short-term level ($x(k)$) of the signal of the signal source (1), and whether an additional local signal source is active or not being determined from the comparison result, and that with an increasing level of the local signal source (lokspk), the step width ($\alpha$) is reduced.

5. Method according to Claim 1, **characterized in that** the step width ($\alpha$), depending on background noise in the room where the signal source (1) and signal sink (2) are, is controlled in such a way that with a low noise level (minnoise) the step width ($\alpha$) remains unchanged, and that as the noise level (lnoise) increases the step width ($\alpha$) becomes progressively less.

6. Method according to Claim 1, **characterized in that** the step width ($\alpha$) depends on a control value, which is formed from the difference of the echo-affected short-term level ($z(k)$) of the signal of the signal sink (2) and the short-term level ($y(k)$) of the echo-compensated signal of the signal sink (2), that a positive sign of the difference indicates that the echo compensator provides a gain and thus the step width ($\alpha$) is retained, that a negative sign of the difference indicates that the echo compensator generates a loss, and that then the step width ($\alpha$) is increased, irrespective of other influencing quantities.

7. Method according to Claim 1, **characterized in that** as the signal source a loudspeaker (1) is used, that as the signal sink a microphone (2) is used, and that the echo compensator is part of a hands-free device for a telecommunication terminal.

8. Method according to Claim 1, **characterized in that** the current coupling value (dlm) is determined using a first minimum value detector (5.13), in which the smallest coupling value (dlmalt) is determined in a first memory and comparison circuit (5.6) within a time interval which is defined by a counter (5.8), and passed to a second memory and comparison circuit (5.7), which in each case compares the momentary value of the coupling signal (dlmfakt) with the smallest coupling value (dlmalt), which it has stored, of the first memory and comparison circuit (5.6), to find an absolutely minimum coupling value (mindlm).

9. Method according to Claim 1, **characterized in that** control of the step width ($\alpha$) and dynamic scaling of the filter coefficients ($c_1 \ldots c_N$) make it possible to implement the method using an FIR filter (5) of short filter length (N) and a fixed-point computer.


**Revendications**

1. Procédé de compensation adaptative d'écho dans un système de transmission, qui inclut un compensateur d'écho comportant un filtre à réponse impulsionnelle finie (5), abrégé en filtre FIR, qui simule les échos attendus et dont le signal de sortie est soustrait du signal porteur d'écho, où les coefficients de filtre ($c_1$ à $c_N$) du filtre FIR (5) sont déterminés selon un algorithme de gradient stochastique normalisé, abrégé en algorithme NLMS, **caractérisé en ce que**,

    le pas ($\infty$) intégré dans l'algorithme NLMS est contrôlé en fonction de l'environnement de la source des signaux (1) et du puits des signaux (2) près du bout du système de transmission, en fonction de grandeurs parasites pertinentes superposées aux signaux utiles et, enfin, en fonction du rendement du compensateur d'écho,

    une grandeur normative du filtre FIR et donc de tous les coefficients de filtre ($c_1$ à $c_N$) du filtre FIR (5) est respectivement déterminée à partir de la valeur du coefficient de filtre le plus significatif ($c_{max}$) du filtre FIR (5) de telle sorte que les valeurs des coefficients de filtre ($c_1$ à $c_N$) sont mises à l'échelle automatiquement de façon dynamique et que la plage de valeurs est comprise entre des limites définies et, que l'on obtient le plus court temps de propagation du signal ($t_{ak}$) entre la source de signaux (1) et le puits des signaux (2) à partir de l'écart temporel du plus grand coefficient ($c_{max}$) du filtre FIR (5) par rapport au début de l'excitation du signal dans le sens de l'émission, que celui-ci est utilisé pour déterminer une plage de temporisation utile du compensateur d'écho et, enfin, que cette information est utilisée pour estimer le couplage résiduel encore présent.

2. Procédé selon la revendication 1, **caractérisé en ce que** le pas ($\infty$) est déterminé en fonction d'une valeur de couplage (dlm) courante restant en aval du compensateur d'écho entre la source des signaux (1) et le puits des signaux (2) de telle sorte que le pas ($\infty$) augmente quand la valeur de couplage (dlm) augmente.

3. Procédé selon la revendication 1, **caractérisé en ce que** le pas ($\infty$) est contrôlé en fonction d'une mesure de qualité (Q) qui est déterminée par la différence entre le niveau de courte durée du signal ($x(k)$) de la source des signaux (1) et une valeur théorique définie (reclev) et que le pas ($\infty$) est positif lorsque le signe de la différence est positif ce qui provoque le recalcul des coefficients de filtre ($c_1$ à $c_N$) et que, lorsque le signe de la différence est négatif, la mesure de qualité Q et le pas ($\infty$) passent à zéro ce qui fait que les coefficients de filtre ($c_1$ à $c_N$) gardent leur valeur.

4. Procédé selon la revendication 1, **caractérisé en ce que** le pas ($\infty$) est contrôlé en fonction d'un signal local superposé au signal du puits des signaux (2) près du bout du système de transmission, par exemple en fonction d'un signal acoustique d'un interlocuteur local, dans la mesure où le niveau de courte durée ($z(k)$) du signal du puits des signaux (2) est comparé avec le niveau de courte durée ($x(k)$) du signal de la source des signaux (1) et qu'il est déterminé par le résultat de la comparaison qu'une source de signaux locale supplémentaire soit active ou non, mais que le pas ($\infty$) est diminué quand le niveau de la source des signaux locale (lokspk) augmente.

5. Procédé selon la revendication 1, **caractérisé en ce que** le pas ($\infty$) est contrôlé en fonction d'un bruit de fond dans l'enceinte dans laquelle se situent la source des signaux (1) et le puits des signaux (2) de telle sorte que le pas ($\infty$) reste inchangé lorsque le niveau de bruit (minnoise) est faible mais que le pas ($\infty$) se réduit progressivement lorsque le niveau de bruit augmente (nloise).

6. Procédé selon la revendication 1, **caractérisé en ce que** le pas ($\infty$) est dépendant d'une grandeur de contrôle qui est formée par la différence entre le niveau de courte durée ($z(k)$), porteur d'écho, du signal du puits des signaux (2) et le niveau de courte durée ($y(k)$ du signal à écho compensé du puits des signaux (2), qu'un signe positif de la différence indique si le compensateur d'écho produit un gain ce qui fait que le pas ($\infty$) est maintenu, qu'un signe négatif de la différence indique que le compensateur d'écho produit une perte ce qui fait que le pas ($\infty$) est augmenté indépendamment d'autres grandeurs pertinentes.

7. Procédé selon la revendication 1, **caractérisé en ce qu'**un haut-parleur (1) sert de source des signaux (1) et qu'un microphone sert de puits des signaux (2) et que le compensateur d'écho est un composant d'un système à mains libres d'un équipement téléphonique.

8. Procédé selon la revendication 1, **caractérisé en ce que** la valeur courante de couplage (dlm) est déterminée au moyen d'un identificateur de valeur minimale (5.13) dans lequel la plus petite valeur de couplage (dlmalt) est définie dans un intervalle de temps fixé par un compteur (5.8) dans un premier circuit de mémorisation et de comparaison (5.6) et transmis à un second circuit de mémorisation et de comparaison (5.7) lequel compare la valeur instantanée du signal de couplage (dlmfakt) avec la plus petite valeur de couplage (dlmalt) issue du premier circuit de mémorisation et de comparaison (5.6) qu'il a enregistrée afin de trouver une valeur de couplage effectivement minimale (mindlm).

9. Procédé selon la revendication 1, **caractérisé en ce que** le contrôle du pas ($\propto$) et la mise à l'échelle dynamique des coefficients de filtre ($c_1$ à $c_N$) permet une réalisation dudit procédé utilisant un filtre FIR (5) de longueur courte (N) et au moyen d'un calculateur à virgule fixe.

Fig. 1

Fig. 2

Fig. 3

Fig.4

Fig. 5

Fig.6

Fig. 7

FIG. 8